# EUROPÄISCHE PATENTSCHRIFT

(11) **EP 2 861 443 B1**
(45) Veröffentlichungstag und Bekanntmachung des Hinweises auf die Patenterteilung: **11.10.2017**
(21) Anmeldenummer: 13730177.6
(22) Anmeldetag: 12.06.2013
(51) Int. Cl.: B60K 6/48, B60K 28/16, B60W 20/00, B60W 10/02, B60W 10/08, B60W 30/02, B60W 30/18

(54) **FAHRZEUGSTABILISIERUNG FÜR EIN HYBRIDFAHRZEUG BEI BREMSSCHLUPF DER ANTRIEBSRÄDER ODER ERHÖHTER GEFAHR HIERFÜR**
VEHICLE STABILIZATION FOR A HYBRID VEHICLE IN THE EVENT OF BRAKE SLIP OF THE DRIVE WHEELS OR INCREASED RISK THEREOF
STABILISATION DE VÉHICULE POUR VÉHICULE HYBRIDE EN CAS DE PATINAGE OU DE RISQUE ACCRU DE PATINAGE DES ROUES MOTRICES

(30) Priorität: 19.06.2012 DE 102012210328
(43) Veröffentlichungstag der Anmeldung: 22.04.2015
(73) Patentinhaber: Bayerische Motoren Werke Aktiengesellschaft, 80809 München (DE)
(72) Erfinder: BAER, Thomas, 86923 Finning (DE); CAPELLARO, Stephan, 80999 München (DE); KNÖFERL, Johann, 86529 Schrobenhausen (DE); WILLOT, Jerome, 81739 München (DE); HARDTKE, Thomas, 81673 München (DE); PROMMNITZ, Michael, 80788 München (DE); SCHNAPPAUF, Florian, 80788 München (DE)
(86) Internationale Anmeldenummer: PCT/EP2013/062195
(87) Internationale Veröffentlichungsnummer: WO 2013/189812

(56) Entgegenhaltungen:
- DE-A1- 10 332 207
- DE-A1- 19 549 259
- DE-A1- 19 802 480
- DE-A1-102008 023 162
- DE-C1- 10 163 208

## Beschreibung

Die Erfindung betrifft ein Verfahren zur Fahrzeugstabilisierung für ein Hybridfahrzeug bei Bremsschlupf der Antriebsräder oder erhöhter Gefahr hierfür.

In den nachfolgenden Ausführungen weisen im Allgemeinen (Motor-)Momente, die das Fahrzeug beschleunigen, positive Werte und (Motor-)Momente, die das Fahrzeug verzögern, negative Werte auf. Wenn jedoch explizit von einem Bremsmoment, Motorschleppmoment oder Rekuperationsmoment gesprochen wird, wirkt ein derartiges Bremsmoment, Motorschleppmoment bzw. Rekuperationsmoment mit positivem Wert verzögernd auf das Fahrzeug.

Bei herkömmlichen rein verbrennungsmotorisch angetriebenen Fahrzeugen wird die Fahrzeugstabilität bei abruptem Gaswegnehmen, Zurückschalten oder Bremsen durch eine Motorschleppmomentenregelung sichergestellt. In derartigen Zuständen wirkt ein dem Vortrieb des Fahrzeugs entgegenwirkendes Bremsmoment, nämlich das Motorschleppmoment des Verbrennungsmotors. Sofern dieses Bremsmoment des Verbrennungsmotors bei insbesondere glatter Fahrbahn so groß wird, dass das wirksame Moment am Rad nicht mehr vollständig auf die Straße übertragen werden kann und merklicher Bremsschlupf auftritt, greift die Motorschleppmomentenregelung ein und stellt ein höheres Motormoment ein, so dass die Räder beschleunigt werden und der Schlupf abgebaut wird.

Im gebremsten Zustand mit betätigter Betriebsbremse liegt eine erschwerte Situation vor, da sich dann das Bremsmoment des Antriebs und das über die Betriebsbremsen eingestellte Bremsmoment addieren, so dass dann das maximale Kraftübertragungsvermögen der Reifen zwischen Fahrzeug und Fahrbahn leichter überschritten werden kann.

Derartige Motorschleppmomentenregelungen werden auch bei Hybridfahrzeugen eingesetzt, die einen Verbrennungsmotor und eine elektrische Maschine als Antriebsmotoren sowie eine Kupplung zwischen dem Verbrennungsmotor und der elektrischen Maschine umfassen, über welche das Moment des Verbrennungsmotors von den Antriebsrädern entkoppelbar ist. Bei geschlossener Kupplung überlagern sich an der elektrischen Maschine das Moment des Verbrennungsmotors und das Moment der elektrischen Maschine, so dass sich das wirksame Moment an der elektrischen Maschine aus dem Moment des Verbrennungsmotors (das vom Verbrennungsmotor gestellte Moment) und dem Moment der elektrischen Maschine (das von der elektrischen Maschine gestellte Moment) ergibt.

Ein derartiges Hybridfahrzeug mit Verbrennungsmotor und elektrischer Maschine und dazwischen liegender Kupplung ist in der Druckschrift DE 10 2005 024 359 A1 dargestellt. Der Antriebsstrang des Hybridfahrzeugs umfasst einen Verbrennungsmotor zur Erzeugung eines Antriebsmoments. Die Einrichtung umfasst weiter eine koaxial um eine Antriebswelle herum angeordnete elektrische Maschine, die mit dem einen Ende ihrer Rotorwelle mit dem Verbrennungsmotor über die Kupplung und die Antriebswelle in Serie geschaltet ist und die mit dem anderen Ende ihrer Rotorwelle mit einer Getriebeeinheit verbunden ist.

In der Druckschrift DE 198 02 480 A1 ist ein Hybridantrieb mit einem Verbrennungsmotor und einem als Generator betreibbaren Elektromotor beschrieben. Zwischen dem Verbrennungsmotor und dem dazu in Reihe angeordneten Elektromotor ist eine Kupplung angeordnet. Bei nicht betätigtem Fahrpedal wird die Kupplung geöffnet und der Elektromotor auf Generatorbetrieb geschaltet, so dass über den Elektromotor ein Schleppmoment bewirkt wird. Bei übermäßigem Bremsschlupf kann das Schleppmoment des Elektromotors verringert werden.

Die Druckschrift DE 10 2008 023 162 A1 beschreibt ein Hybridfahrzeug mit Verbrennungsmotor und Elektromaschinen, wobei jeweils eine Kupplung zwischen Rad und Elektromaschine und zwischen Elektromaschine und Verbrennungsmotor vorgesehen ist. Zur Entschärfung einer Schlupfsituation werden die Elektromaschinen angesteuert.

Aus der Druckschrift DE 101 63 208 C1 ist ein Verfahren zur Regelung des Antriebsmoments nach einem Lastwechsel bei Hybridfahrzeugen bekannt. Beim Auftreten von Bremsschlupf an den Antriebsrädern infolge eines Lastwechsels wird das Antriebsmoment über den oder die Elektromotoren des Hybridfahrzeugs aufgebracht.

Es ist Aufgabe der Erfindung, ein verbessertes Verfahren sowie ein entsprechendes System zur Fahrzeugstabilisierung bei Vorliegen eines Bremsmoments des Verbrennungsmotors für ein Hybridfahrzeug anzugeben.

Die Aufgabe wird durch die Merkmale der unabhängigen Patentansprüche gelöst. Vorteilhafte Ausführungsformen sind in den abhängigen Ansprüchen beschrieben.

Ein erster Aspekt der Erfindung betrifft ein Verfahren zur Fahrzeugstabilisierung für ein Hybridfahrzeug im Fall von Bremsschlupf der Antriebsräder oder einer erhöhten Gefahr hierfür. Hierbei liefert der Verbrennungsmotor ein negatives Moment, dass das Fahrzeug abbremst, d. h. der Verbrennungsmotor liefert ein Bremsmoment. Das Bremsmoment des Verbrennungsmotors entspricht typischerweise dem Schleppmoment. Ferner entspricht auch das seitens der elektrischen Maschine gestellte Moment typischerweise in dieser Situation einem negativen Moment, d. h. es liegt ein Bremsmoment der elektrischen Maschine vor, beispielsweise ein Rekuperationsmoment (um beispielsweise das Bordnetz mit Strom zu versorgen und/oder den elektrischen Energiespeicher zu laden). Bremsmomente der Antriebsmotoren, welche dem Vortrieb des Fahrzeugs entgegenwirken, liegen beispielsweise bei Schubbetrieb (d. h. bei Nichtbetätigung des Fahrpedals) oder im gebremsten Zustand vor.

Bei dem Verfahren wird vorausgesetzt, dass das Hybridfahrzeug eine Kupplung zwischen dem Verbrennungsmotor und der elektrischen Maschine umfasst, über welche das Moment des Verbrennungsmotors von den Antriebsrädern entkoppelbar ist. Bei geschlossener Kupplung ergibt sich das resultierende Moment an der elektrischen Maschine aus dem Moment des Verbrennungsmotors und dem Moment der elektrischen Maschine. Vorzugsweise handelt es sich bei dem Hybridfahrzeug um eine Hybridstruktur, bei der der Verbrennungsmotor über eine Antriebswelle und die Kupplung mit der elektrischen Maschine wirkverbunden ist und die elektrische Maschine koaxial mit dem einen Ende ihrer Rotorwelle mit dem Verbrennungsmotor über die Kupplung und die Antriebswelle in Serie geschaltet ist, wie dies in der Druckschrift DE 10 2005 024 359 A1 beschrieben ist.

Gemäß dem Verfahren wird das Vorliegen einer bestimmten Fahrzeugsituation mit Bremsschlupf der Antriebsräder erkannt. Hierzu wird beispielsweise der Radschlupf der Antriebsräder ausgewertet und bei Überschreiten eines Schwellwerts für den Radschlupf auf das Vorliegen einer derartigen Fahrzeugsituation geschlossen. Zusätzlich kann zum Feststellen einer derartigen Situation noch vorausgesetzt werden, das der Fahrer gebremst hat. Optional hängt das Erkennen einer derartigen Situation auch noch von der Auswertung der Reibwerte der Antriebsräder ab.
Alternativ kann auch das Vorliegen einer Situation mit erhöhter Gefahr für Bremsschlupf erkannt werden, ohne dass auch tatsächlich Bremsschlupf vorliegen muss. Es kann beispielsweise vorgesehen sein, dass eine derartige Situation im gebremsten Zustand vorliegt, wenn der Fahrer das Bremspedal betätigt, ohne dass der Radschlupf ausgewertet wird.

Wird eine solche Fahrzeugsituation mit Bremsschlupf oder mit erhöhter Gefahr hierfür erkannt, wird die Kupplung zwischen dem Verbrennungsmotor und der elektrischen Maschine geöffnet und das Moment der elektrischen Maschine erhöht, d. h. das vor Öffnen der Kupplung typischerweise negative Moment der elektrischen Maschine wird erhöht. Die Erhöhung des (typischerweise negativen) Moments der elektrischen Maschine in Richtung positiver Momentenwerte entspricht einer Verringerung des Bremsmoments der elektrischen Maschine.

Durch Öffnen der Kupplung zwischen dem Verbrennungsmotor und der elektrischen Maschine kann das Bremsmoment (typischerweise das Schleppmoment) des Verbrennungsmotors schnell von den Antriebsrädern entkoppelt werden, so dass sofort das an den Antriebsrädern wirkende negative Moment des Verbrennungsmotors vom Betrag her reduziert und damit ein etwaiger Radschlupf verringert werden. Die Reaktionsgeschwindigkeit des erfindungsgemäßen Verfahrens ist also deutlich höher als die zeitlich träge Änderung des Motormoments des Verbrennungsmotors bei einer konventionellen Motorschleppmomentenregelung.

Bei geöffneter Kupplung zwischen Verbrennungsmotor und elektrischer Maschine ist aber weiterhin die elektrische Maschine mit den Antriebsrädern gekoppelt, so dass ein etwaiges Bremsmoment der elektrischen Maschine auf die Antriebsräder wirken würde. Erfindungsgemäß wird aber das Moment der elektrischen Maschine erhöht, d. h. das Bremsmoment der elektrischen Maschine (beispielsweise das Schleppmoment oder Rekuperationsmoment der elektrischen Maschine) reduziert, so dass die Bremswirkung der elektrischen Maschine auf die Antriebsräder reduziert oder gar vollständig ausgeräumt wird. Bei Bedarf kann über die elektrische Maschine an den Antriebsrädern aktiv ein positives Antriebsmoment aufgebaut werden, um den Radschlupf durch ein aktives Antriebsmoment zu verringern. Im Vergleich zu einer konventionellen Motorschleppmomentenregelung kann nicht nur das Öffnen der Kupplung, sondern auch die Änderung des Motormoments der elektrischen Maschine deutlich schneller erfolgen als die Änderung des Motormoments eines Verbrennungsmotors.

Zur Umsetzung des Verfahrens werden eine Steuereinheit zur Fahrzeugstabilisierung, eine Steuereinheit zur Motorsteuerung und eine Steuereinheit zur Getriebesteuerung entsprechend vernetzt.

Vorzugsweise wird bei dem Verfahren ein gebremster Fahrzeugzustand mit Bremsschlupf (oder einer Gefahr hierfür) erkannt, bei dem sich das Fahrzeug in einem gebremsten Zustand mit betätigter Betriebsbremse befindet. Bei der Betriebsbremse handelt es sich typischerweise um eine hydraulisch Bremse. Die Betriebsbremse kann seitens des Fahrers durch Betätigen des Bremspedals oder automatisch seitens eines Fahrerassistenzsystems betätigt werden, beispielsweise seitens einer adaptiven Geschwindigkeitsregelung (ACC - adaptive cruise control). Das vorstehend beschriebene Öffnen der Kupplung und Ändern des Moments der elektrischen Maschine erfolgt also vorzugsweise unter der Voraussetzung der Betätigung der Betriebsbremse. Wenn kein gebremster Zustand vorliegt, wird beispielsweise bei Erkennen eines Bremsschlupfes eine konventionelle Motorschleppmomentenregelung aktiv.
Gemäß einer bevorzugten Ausführungsform wird bei Erkennen eines vorstehend beschriebenen Fahrzeugzustands die Kupplung geöffnet und ein Motormoment an der elektrischen Maschine von ungefähr null eingestellt. Bei geöffneter Kupplung ist in diesem Fall das Moment der elektrischen Maschine (d. h. das von der elektrischen Maschine gestellte Moment) ungefähr auch null, da der entkoppelte Verbrennungsmotor keinen Einfluss mehr auf das Moment an der elektrischen Maschine hat. In diesem Fall wirkt das Moment an der elektrischen Maschine also nicht mehr bremsend auf die Antriebsräder, so dass der Bremsschlupf verringert wird.
In diesem Fall ist es von Vorteil, wenn nach Öffnen der Kupplung und Vorliegen eines Moments an der elektrischen Maschine von ungefähr null, festgestellt wird, ob zur Fahrzeugstabilisierung Bedarf für ein positives Antriebsmoment besteht. Dies kann beispielsweise durch Auswerten des Raddrehzahl- und Radbeschleunigungsverhaltens der Antriebsräder erkannt werden. Im Fall eines Bedarfs für ein positives Antriebsmoment, wird ein positives Antriebsmoment an der elektrischen Maschine eingestellt. Bei geöffneter Kupplung ist in diesem Fall das gestellte Moment der elektrischen Maschine (d. h. das von der elektrischen Maschine gestellte Moment) auch positiv, da der entkoppelte Verbrennungsmotor keinen Einfiluss mehr auf das Moment an der elektrischen Maschine hat und das an der elektrischen Maschine wirksame Moment dem seitens der elektrischen Maschine gestellten Moment (d. h. dem Moment der elektrischen Maschine) entspricht.

Dieser zweistufige Ansatz - nämlich erst Einstellen eines Moments von ungefähr null und dann nach Vorliegen eines Nullmoments Einstellen eines positiven Antriebsmoments, sofern Bedarf hierfür besteht - bietet den Vorteil, dass sehr schnell das Bremsmoment an der elektrischen Maschine eliminiert werden kann und nur im Bedarfsfall, falls dies zur Stabilisierung des Fahrzeugs nicht ausreicht, durch Vorgabe eines positiven Moments an der elektrischen Maschine korrigierend eingegriffen wird. Sofern kein Bedarf besteht, wird also ein Entbremsen oder Anschieben des Fahrzeugs durch ein positives Moment vermieden.

Es wäre es auch denkbar, dass sofort ein positives Moment an der elektrischen Maschine eingestellt wird, ohne dass vorher auf ein Nullmoment geregelt wird.

Generell wäre es auch denkbar, dass in einem ersten Schritt ein erstes Moment an der elektrischen Maschine eingestellt wird und bei Bedarf dann in einem zweiten Schritt ein höheres Moment als das erste Moment an der elektrischen Maschine eingestellt wird.

Ein zweiter Aspekt der Erfindung betrifft ein System zur Fahrzeugstabilisierung für ein einen Verbrennungsmotor und eine elektrische Maschine als Antriebsmotoren umfassendes Hybridfahrzeug. Das System ist eingerichtet, das Vorliegen eines Fahrzeugzustands mit Bremsschlupf der Antriebsräder oder erhöhter Gefahr hierfür zu erkennen. Ferner ist das System eingerichtet, in Reaktion hierauf, die Kupplung zwischen dem Verbrennungsmotor und der elektrischen Maschine zu öffnen und das Moment der elektrischen Maschine zu erhöhen, d. h. im Fall eines negativen Moments der elektrischen Maschine das Bremsmoment der elektrischen Maschine zu verringern.

Das System umfasst beispielsweise ein Steuereinheit zur Fahrzeugstabilisierung, eine Steuereinheit zur Motorsteuerung und eine Steuereinheit zur Getriebesteuerung, die zur Umsetzung der vorstehenden Funktionalitäten entsprechend vernetzt sind.

Die Steuereinheiten können beispielsweise über ein gemeinsames Bussystem miteinander verbunden sein, beispielsweise einen LIN-Bus (Local Interconnect Network), einen CAN-Bus (Controller Area Network) oder einen FlexRay-Bus.

Gemäß einer bevorzugten Ausgestaltung des Systems ist die Steuereinheit zur Fahrstabilisierung eingerichtet, einen Fahrzeugzustand mit Bremsschlupf der Antriebsräder zu erkennen, und im Fall des Erkennens des Fahrzeugzustands bei der Steuereinheit zur Motorsteuerung ein Öffnen der Kupplung und eine Momentenänderung anzufordern. Die Steuereinheit zur Motorsteuerung ist eingerichtet, bei der Steuereinheit zur Getriebesteuerung ein Öffnen der Kupplung anzufordern, wenn das Öffnen der Kupplung seitens der Steuereinheit zur Fahrstabilisierung bei der Steuereinheit zur Motorsteuerung angefordert wurde.

Die vorstehenden Ausführungen zum erfindungsgemäßen Verfahren nach dem ersten Aspekt der Erfindung gelten in entsprechender Weise auch für das erfindungsgemäße System nach dem zweiten Aspekt der Erfindung; vorteilhafte Ausführungsbeispiele des erfindungsgemäßen Systems entsprechen den beschriebenen vorteilhaften Ausführungsbeispielen des erfindungsgemäßen Verfahrens.

Die Erfindung wird nachfolgend unter Zuhilfenahme auf die beigefügten Zeichnungen anhand eines Ausführungsbeispiels beschrieben. In diesen zeigen:
- Fig. 1: einen beispielhaften Antriebsstrang eines Hybridfahrzeug; und
- Fig. 2: ein Ausführungsbeispiel für das erfindungsgemäße Verfahren zur Fahrzeugstabilisierung.

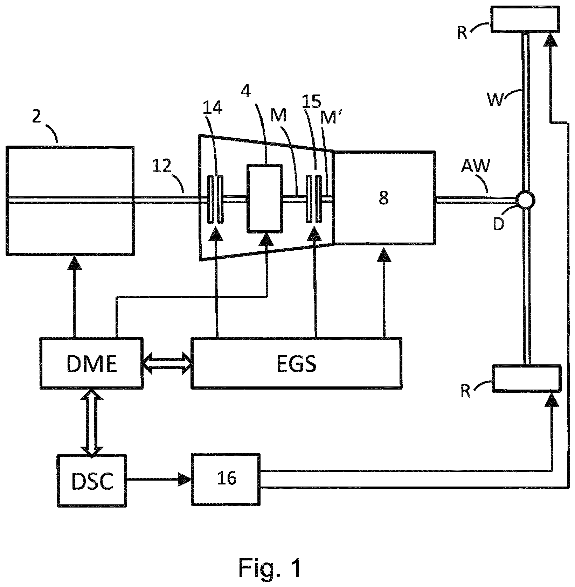

Fig. 1 zeigt einen beispielhaften Antriebsstrang eines Hybridfahrzeugs wie in der Druckschrift DE 10 2005 024 359 A1 beschrieben.

Der in Fig. 1 dargestellte Hybridantriebsstrang umfasst einen Verbrennungsmotor 2, eine elektrische Maschine 4 und eine Getriebeeinheit 8. Der Verbrennungsmotor 2 ist über eine Antriebswelle 12 und eine zwischen Verbrennungsmotor 2 und elektrischer Maschine 4 angeordnete Trennkupplung 14 mit der ersten elektrischen Maschine 4 verbunden.

Mit dem dem Verbrennungsmotor 2 zugeordneten Ende der Rotorwelle ist die elektrischen Maschine mit dem Verbrennungsmotor 2 über die Kupplung 14 und die Antriebswelle AW in Serie geschaltet.
Die elektrische Maschine 4, die Getriebeeinheit 8 und die Trennkupplung 14 können in einem gemeinsamen Gehäuse integriert sein. Die elektrische Maschine 4 ist bevorzugt derart ausgebildet, dass sie sowohl motorisch als auch generatorisch betreibbar ist. Am Getriebeausgang wirkt das Antriebsmoment über eine Getriebeabtriebswelle AW, ein Differentialgetriebe D und Antriebswellen W auf die Antriebsräder R.

Ferner ist optional noch eine zweite Kupplung 15 vorgesehen, die sich im Antriebsstrang zwischen der elektrischen Maschine 4 und der Getriebeeinheit 8 befindet. Die zweite Kupplung 15 dient als Anfahrelement sowie zum Trennen des Kraftschlusses zwischen den Antriebsmaschinen 2, 4 und der Getriebeeinheit 8.

Bei geschlossener Kupplung 14 überlagert sich an der elektrischen Maschine 4 das Moment des Verbrennungsmotors und das Moment der elektrischen Maschine, so dass sich das wirksame Moment M an der elektrischen Maschine aus dem Moment des Verbrennungsmotors und dem Moment der elektrischen Maschine ergibt.

In dem Ausführungsbeispiel ist eine Steuereinheit DSC (DSC - dynamic stability control) zur Fahrzeugstabilisierung, eine gemeinsame Steuereinheit DME (DME - digitale Motorelektronik) zur Steuerung des Verbrennungsmotors 2 und der elektrischen Maschine 4 und eine Steuereinheit EGS (EGS - elektronische Getriebesteuerung) zur Getriebesteuerung 21 vorgesehen.

Die Steuereinheit DSC umfasst eine Antriebsschlupfregelung und ein Bremsenmanagement zur Erhaltung der Fahrzeugstabilität. Hierzu steuert die Steuereinheit DSC eine hydraulische Bremsanlage 16, über die die Antriebsräder R bei Bedarf gebremst werden können.

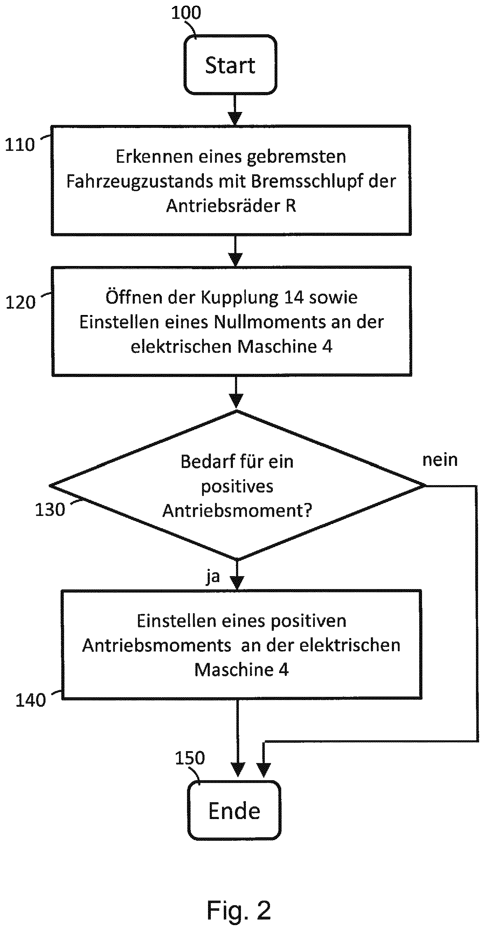

Die Steuereinheiten sind über einen gemeinsamen Bus, beispielsweise CAN- oder LIN-Bus, miteinander verbunden. Die Steuereinheiten arbeiten in der in Fig. 2 dargestellten Weise miteinander zur Fahrzeugstabilisierung im gebremsten Zustand zusammen.

Bei Start (s. Bezugszeichen 100) des Verfahrens sind die Kupplungen 14 und 15 geschlossen.

In Schritt 110 wird von der Steuereinheit DSC das Vorliegen eines gebremsten Fahrzeugzustands mit einem gewissen Bremsschlupf der Antriebsräder erkannt. Im gebremsten Fahrzeugzustand liegt im Allgemeinen ein Bremsmoment, beispielsweise ein Schleppmoment (d. h. ein Antriebsmoment mit negativem Vorzeichen) des Verbrennungsmotors 2 und ein Bremsmoment (beispielsweise ein Schleppmoment oder ein Rekuperationsmoment) der elektrischen Maschine 4 vor. Im gebremsten Zustand wird die Betriebsbremse des Fahrzeugs betätigt, beispielsweise seitens des Fahrers oder seitens eines Fahrerassistenzsystems.

Das Vorliegen dieses Zustands wird beispielsweise erkannt, wenn die Betriebsbremse durch Betätigen des Bremspedals oder durch ein Fahrerassistenzsystem (beispielsweise eine adaptive Geschwindigkeitsregelung) betätigt wird und ein Radschlupf für die Antriebsräder vorliegt, der über einem vorgegebenen Schwellwert liegt. Außerdem können noch weitere Voraussetzungen zum Erkennen des Fahrzeugzustands notwendig sein, beispielsweise das Vorliegen von Reibwerten mit geringer Reibung zwischen den Antriebsrädern R und der Fahrbahn.

Beispielsweise wird bei Bremsen des Fahrzeugs seitens des Fahrers, Vorliegen eines hohen Radschlupfes für die Antriebsräder und Vorliegen von Reibwerten mit geringer Reibung ein bestimmtes Fahrzeugzustands-Flag gesetzt, wobei bei gesetztem Fahrzeugzustands-Flag die nachfolgend beschriebenen Maßnahmen durchgeführt werden.

In Schritt 120 fordert die Steuereinheit DSC in Reaktion auf den erkannten Fahrzeugzustand bei der Steuereinheit DME eine Gegenmaßnahme an, nämlich ein Öffnen der Kupplung 14 zwischen dem Verbrennungsmotor 2 und der elektrischen Maschine 4 sowie ein Einstellen eines Nullmoments an der elektrischen Maschine 4. Die Steuereinheit DSC kann die Steuereinheit DME dazu auffordern, entweder das wirksame Moment M an der elektrischen Maschine 4 auf der Antriebsseite der Kupplung 15 auf null einzustellen, oder - bei einer alternativen Realisierung - das Moment M' auf der Abtriebsseite der Kupplung 15 auf null einzustellen, wodurch in diesem Fall bei geschlossener Kupplung 15 auch das Moment M an der elektrischen Maschine 4 auf der Antriebsseite der Kupplung 15 auf ungefähr null eingestellt wird.

Der Verbrennungsmotor 2 bleibt nach geöffneter Kupplung 14 vorzugsweise weiter an. Bei geöffneter Kupplung 14 entspricht das wirksame Moment M an der elektrischen Maschine 4, d. h. am Rotor der elektrischen Maschine 4, dem Moment der elektrischen Maschine. Beim Einstellen des Moments M an elektrischen Maschine 4 auf den Wert null wird das vorher negative Motormoment der elektrischen Maschine seitens der Steuereinheit DME ungefähr auf den Wert null erhöht.

Das Öffnen der Kupplung 14 erfolgt vorzugsweise unter Einbeziehung der Steuereinheit DME in der Weise, dass die Steuereinheit DSC die Steuereinheit DME hierzu auffordert, wobei in diesem Fall die Steuereinheit DME dann die Steuereinheit EGS zum Öffnen der Kupplung 14 auffordert. Alternativ wäre es auch denkbar, dass die Steuereinheit DSC direkt die Steuereinheit EGS zum Öffnen der Kupplung 14 anweist.

Zusätzlich zum Öffnen der Kupplung und Einstellen eines Nullmoments an der elektrischen Maschine 4 kann ferner seitens der Steuereinheit DSC das Bremssystem 16 derart angesteuert werden, dass der Bremsdruck der Bremsen an den Antriebsräder R reduziert wird, wodurch der Bremsschlupf verringert wird.

Nach Öffnen der Kupplung 14, Einregeln eines Nullmoments an der elektrischen Maschine 4 und gegebenenfalls Reduktion des Bremsdrucks wird geprüft, ob Bedarf für ein positives Antriebsmoment an der elektrischen Maschine besteht (s. Schritt 130). Bei Bedarf wird also das Nullmoment in ein positives Moment an der elektrischen Maschine 4 erhöht (s. Schritt 140), ansonsten endet das Verfahren (s. Bezugszeichen 150). Ein derartiger Bedarf liegt beispielsweise vor, wenn trotz Öffnen der Kupplung und Einstellen eines Nullmoments sowie Reduktion des Bremsdrucks der Bremsen der Antriebsräder R eine zusätzliche Radstabilisierung nötig ist. Durch ein positives Antriebsmoment an der elektrischen Maschine 4 kann nämlich eine zusätzliche Radstabilisierung ähnlich wie bei einer konventionellen Motorschleppmomentenregelung erzielt werden. Der Bedarf hierfür kann beispielsweise durch Auswerten des Raddrehzahlverhaltens der Antriebsräder R erkannt werden. Hierzu erfolgt unter anderem eine Betrachtung des Radschlupfes sowie des Wiederbeschleunigungsverhaltens der Räder R. Durch Vergleich mit Sollwerten und Auswertung des Zeitverhaltens kann die Notwendigkeit eines Stabilisierungseingriffes ermittelt werden.

Es kann vorgesehen sein, dass geprüft wird, ob die elektrische Maschine 4 ein ausreichend hohes Moment stellen kann, und für den Fall, dass dies nicht möglich ist, die Schritte 120 bis 140 nicht durchgeführt werden und in diesem Fall auf die Funktion einer konventionelle Motorschleppmomentenregelung mit geschlossener Kupplung 14 zurückgegriffen wird.

## Patentansprüche

1. Verfahren zur Fahrzeugstabilisierung für ein einen Verbrennungsmotor (2) und eine elektrische Maschine (4) als Antriebsmotoren umfassendes Hybridfahrzeug bei Vorliegen eines Bremsmoments des Verbrennungsmotors (2), wobei das Hybridfahrzeug eine Kupplung (14) zwischen dem Verbrennungsmotor (2) und der elektrischen Maschine (4) umfasst, über welche das Moment des Verbrennungsmotors (2) von den Antriebsrädern (R) entkoppelbar ist, und bei geschlossener Kupplung (14) sich das Moment (M) an der elektrischen Maschine aus dem Moment des Verbrennungsmotors und dem Moment der elektrischen Maschine ergibt,
umfassend die Schritte:
- Erkennen des Vorliegens eines Fahrzeugzustands mit Bremsschlupf der Antriebsräder (R) oder mit erhöhter Gefahr hierfür; und
- in Reaktion hierauf, Öffnen der Kupplung (14) zwischen dem Verbrennungsmotor (2) und der elektrischen Maschine (4) und Erhöhen des Moments der elektrischen Maschine (4).

2. Verfahren nach Anspruch 1, wobei der Fahrzeugzustand ein gebremster Zustand mit betätigter Betriebsbremse ist.

3. Verfahren nach einem der vorhergehenden Ansprüche, wobei das Moment der elektrischen Maschine (4) derart erhöht wird, dass das wirksame Moment (M) an der elektrischen Maschine auf einen Wert von ungefähr null eingestellt wird.

4. Verfahren nach einem der vorhergehenden Ansprüche, wobei das Moment (M) der elektrischen Maschine derart erhöht wird, dass ein positives Antriebsmoment an der elektrischen Maschine eingestellt wird.

5. Verfahren nach einem der vorhergehenden Ansprüche, wobei
- das Moment der elektrischen Maschine (4) derart erhöht wird, dass das wirksame Moment (M) an der elektrischen Maschine auf einen ersten Wert eingestellt wird,
- nach Vorliegen des ersten Momentenwerts an der elektrischen Maschine (4) festgestellt wird, ob zur Fahrstabilisierung Bedarf für ein höheres Moment als den ersten Momentenwert besteht, und
- im Fall eines derartigen Bedarfs, ein höheres Moment an der elektrischen Maschine (4) eingestellt wird.

6. Verfahren nach Anspruch 5, wobei der erste Wert null ist und das höhere Moment ein positives Antriebsmoment an der elektrischen Maschine ist.

7. Verfahren nach einem der vorhergehenden Ansprüche, wobei das Verfahren zur Fahrstabilisierung für ein derartiges Hybridfahrzeug dient, bei dem der Verbrennungsmotor (2) über eine Antriebswelle (12) und die Kupplung (14) mit der elektrischen Maschine (4) gekoppelt ist und die elektrische Maschine (4) mit dem einen Ende ihrer Rotorwelle mit dem Verbrennungsmotor (2) über die Kupplung (14) und die Antriebswelle (12) in Serie geschaltet ist.

8. Verfahren nach einem der vorhergehenden Ansprüche, wobei das Moment der elektrischen Maschine vor Öffnen der Kupplung (14) negativ ist.

9. System zur Fahrzeugstabilisierung für ein einen Verbrennungsmotor (2) und eine elektrische Maschine (4) als Antriebsmotoren umfassendes Hybridfahrzeug bei Vorliegen eines Bremsmoments des Verbrennungsmotors (2), wobei das Hybridfahrzeug eine Kupplung (14) zwischen dem Verbrennungsmotor (2) und der elektrischen Maschine (4) umfasst, über welche das Moment des Verbrennungsmotors (2) von den Antriebsrädern (R) entkoppelbar ist, und bei geschlossener Kupplung (14) sich das Moment (M) an der elektrischen Maschine (4) aus dem Moment des Verbrennungsmotors (2) und dem Moment der elektrischen Maschine (4) ergibt, wobei das System eingerichtet ist,
- das Vorliegen eines Fahrzeugzustand mit Bremsschlupf der Antriebsräder (R) oder mit erhöhter Gefahr hierfür zu erkennen, und
- in Reaktion hierauf, die Kupplung (14) zwischen dem Verbrennungsmotor (2) und der elektrischen Maschine (4) zu öffnen und das Moment der elektrischen Maschine (4) zu erhöhen.

10. System nach Anspruch 9, wobei das System umfasst:
- eine Steuereinheit (DSC) zur Fahrstabilisierung,
- eine Steuereinheit (DME) zur Motorsteuerung,
- eine Steuereinheit (EGS) zur Getriebesteuerung,
und
- die Steuereinheit (DSC) zur Fahrstabilisierung eingerichtet ist, einen Fahrzeugzustand mit Bremsschlupf der Antriebsräder zu erkennen, und im Fall des Erkennens des Fahrzeugzustands bei der Steuereinheit (DME) zur Motorsteuerung ein Öffnen der Kupplung (14) und eine Momentenänderung anzufordern, und die Steuereinheit (DME) zur Motorsteuerung eingerichtet ist, bei der Steuereinheit (EGS) zur Getriebesteuerung ein Öffnen der Kupplung (14) anzufordern, wenn das Öffnen der Kupplung (14) seitens der Steuereinheit (DSC) zur Fahrstabilisierung bei der Steuereinheit (DME) zur Motorsteuerung angefordert wurde.

## Claims

1. A method for vehicle stabilisation for a hybrid vehicle comprising an internal combustion engine (2) and an electric machine (4) as drive motors when a braking torque of the internal combustion engine (2) is present, wherein the hybrid vehicle comprises a clutch (14) between the internal combustion engine (2) and the electric machine (4), by means of which clutch the torque of the internal combustion engine (2) can be decoupled from the drive wheels (R), and when the clutch (14) is engaged the torque (M) at the electric machine results from the torque of the internal combustion engine and the torque of the electric machine,
comprising the following steps:
- detecting the presence of a vehicle state with brake slip of the drive wheels (R) or with increased risk thereof; and
- in response thereto, releasing the clutch (14) between the internal combustion engine (2) and the electric machine (4) and increasing the torque of the electric machine (4).

2. A method according to claim 1, wherein the vehicle state is a braked state with actuated operating brake.

3. A method according to either one of the preceding claims, wherein the torque of the electric machine (4) is increased in such a way that the effective torque (M) at the electric machine is set to a value of approximately zero.

4. A method according to any one of the preceding claims, wherein the torque (M) of the electric machine is increased in such a way that a positive driving torque is set at the electric machine.

5. A method according to any one of the preceding claims, wherein
- the torque of the electric machine (4) is increased in such a way that the effective torque (M) at the electric machine is set to a first value,
- after the presence of the first torque value at the electric machine (4), it is determined whether there is a need for a torque higher than the first torque value for driving stabilisation, and
- in the event of such a need, a higher torque is set at the electric machine (4).

6. A method according to claim 5, wherein the first value is zero and the higher torque is a positive driving torque at the electric machine.

7. A method according to any one of the preceding claims, wherein the method for driving stabilisation is used for a hybrid vehicle of this type, in which the internal combustion engine (2) is coupled to the electric machine (4) via a driveshaft (12) and the clutch (14) and the electric machine (4) is connected in series by one end of its rotor shaft to the internal combustion engine (2) via the clutch (14) and the driveshaft (12).

8. A method according to any one of the preceding claims, wherein the torque of the electric machine is negative before the clutch (14) is released.

9. A system for vehicle stabilisation for a hybrid vehicle comprising an internal combustion engine (2) and an electric machine (4) as drive motors when a braking torque of the internal combustion engine (2) is present, wherein the hybrid vehicle comprises a clutch (14) between the internal combustion engine (2) and the electric machine (4), via which clutch the torque of the internal combustion engine (2) can be decoupled from the drive wheels (R), and when the clutch (14) is engaged the torque (M) at the electric machine (4) results from the torque of the internal combustion engine (2) and the torque of the electric machine (4), wherein the system is designed
- to detect the presence of a vehicle state with brake slip of the drive wheels (R) or with increased risk thereof, and,
- in response thereto, to release the clutch (14) between the internal combustion engine (2) and the electric machine (4) and to increase the torque of the electric machine (4),

10. A system according to claim 9, wherein the system comprises:
- a driving stabilisation control unit (DSC),
- an engine control unit (DME),
- a transmission control unit (EGS),
and
- the vehicle stabilisation control unit (DSC) is designed to detect a vehicle state with brake slip of the drive wheels and, in the event that such a vehicle state is detected, to output a request to the engine control unit (DME) to release the clutch (14) and change the torque, and the engine control unit (DME) is designed to output a request to the transmission control unit (EGS) to release the clutch (14) once the request to release the clutch (14) output by the vehicle stabilisation control unit (DSC) has been received by the engine control unit (DME).

## Revendications

1. Procédé de stabilisation d'un véhicule hybride comportant un moteur thermique (2) et une machine électrique (4) comme moteurs d'entraînement, dans le cas où il existe un couple de freinage exercé par le moteur thermique (2),
le véhicule hybride ayant un embrayage (14) entre le moteur thermique (2) et la machine électrique (4) qui peut être découplé pour la transmission du couple entre le moteur thermique (2) et les roues motrices (R) et lorsque l'embrayage (14) est fermé, le couple (M) sur la machine électrique se compose du couple fourni par le moteur thermique et du couple de la machine électrique,
procédé comprenant les étapes suivantes consistant à :
- reconnaître l'existence d'un état du véhicule avec patinage de freinage des roues motrices (R) ou un grand risque pour cela et,
- en réaction, ouvrir l'embrayage (14) entre le moteur thermique (2) et la machine électrique (4) et augmenter le couple de la machine électrique (4).

2. Procédé selon la revendication 1,
**caractérisé en ce que**
l'état du véhicule est l'état freiné avec le frein de service actionné.

3. Procédé selon l'une des revendications précédentes,
selon lequel
on augmente le couple de machine électrique (4) pour que le couple efficace (M) appliqué à la machine électrique s'établisse sur une valeur qui est sensiblement nulle.

4. Procédé selon l'une des revendications précédentes,
**caractérisé en ce qu'**
on augmente le couple (M) de la machine électrique de façon à régler un couple moteur positif sur la machine électrique.

5. Procédé selon l'une des revendications précédentes,
**caractérisé en ce qu'**
on augmente le couple de la machine électrique (4) pour que le couple efficace (M) de la machine électrique soit réglé sur une première valeur,
- en présence de la première valeur du couple sur la machine électrique (4) on détermine si pour stabiliser la trajectoire il faut un couple plus élevé que le premier couple et,
- au cas d'une telle demande, on règle un couple plus élevé sur la machine électrique (4).

6. Procédé selon la revendication 5,
**caractérisé en ce que**
la première valeur est nulle et le couple plus élevé est un couple moteur positif sur la machine électrique.

7. Procédé selon l'une des revendications précédentes,
**caractérisé en ce que**
le procédé de stabilisation est destiné à un véhicule hybride dont le moteur thermique (2) est couplé par un arbre d'entraînement (12) et l'embrayage (14) à la machine électrique (4) et,
la machine électrique (4) est branchée en série par une extrémité de son arbre de rotor au moteur thermique (2) par l'embrayage (14) et l'arbre d'entraînement (12).

8. Procédé selon l'une des revendications précédentes,
**caractérisé en ce qu'**
avant l'ouverture de l'embrayage (14), le couple fourni par la machine électrique est négatif.

9. Système de stabilisation d'un véhicule hybride comportant un moteur thermique (2) et une machine électrique (4) comme moteurs d'entraînement, en cas de couple de freinage du moteur thermique (2), le véhicule hybride ayant un embrayage (14) entre le moteur thermique (2) et la machine électrique (4) qui découple le couple du moteur thermique (2) en amont des roues motrices (R) et en cas d'embrayage (14) fermé, le couple (M) de la machine électrique (4) se compose du couple du moteur thermique (2) et de celui de la machine électrique (4), système conçu pour
- reconnaître l'existence d'un état de circulation avec patinage de freinage des roues motrices (R) ou avec un risque augmenté pour cela et,
- en réaction, ouvrir l'embrayage (14) entre le moteur thermique (2) et la machine électrique (4) et augmenter le couple de la machine électrique (4).

10. Système selon la revendication 9 comprenant
- une unité de commande (DSC) pour stabiliser la trajectoire,
- une unité de commande (DME) pour commander le moteur,
- une unité de commande (EGS) pour commander la transmission et,
- l'unité de commande (DSC) pour stabiliser est conçue pour reconnaître un état du véhicule avec patinage de freinage des roues motrices et dans le cas de la reconnaissance de l'état du véhicule pour l'unité de commande (DME), pour la commande du moteur, l'ouverture de l'embrayage (14) et une modification du couple et l'unité de commande (DME) est conçue pour commander le moteur et,
- l'unité de commande (EGS) pour commander la transmission, demande l'ouverture de l'embrayage (14) si l'ouverture de l'embrayage (14) a déjà été demandée par l'unité de commande (DSC) pour stabiliser la trajectoire de l'unité de commande (DME) servant à la commande du moteur.
